# FASCICULE DE BREVET EUROPEEN

(11) **EP 2 339 120 B1**
(45) Date de publication et mention de la délivrance du brevet: **08.07.2015**
(21) Numéro de dépôt: 09015844.5
(22) Date de dépôt: 22.12.2009
(51) Int. Cl.: F01D 5/28, F01D 9/04, F01D 25/24, F04D 29/54, F01D 25/16

(54) **Étage redresseur de turbomachine et compresseur associé**
Leitschaufelstufe einer Strömungsmaschine und zugehöriger Verdichter
Turbomachine stator stage and corresponding compressor

(43) Date de publication de la demande: 29.06.2011
(73) Titulaire: Techspace Aero S.A., 4041 Milmort (BE)
(72) Inventeur: Wery, Xavier, 4000 Liege (BE); Derclaye, Alain, 4218 Couthuin (BE); Penalver Castro, Enrique, 4633 Soumagne (BE)
(74) Mandataire: Pronovem

(56) Documents cités:
- EP-A1- 0 761 931
- EP-A1- 2 075 413
- EP-A2- 0 942 150
- EP-A2- 1 770 246
- GB-A- 2 004 329
- US-A- 4 785 625
- US-A1- 2008 279 679

## Description

### Objet de l'invention

La présente invention concerne le domaine des turbomachines. Elle se rapporte plus particulièrement à une architecture de redresseur dans un compresseur axial de turbomachine.

### Etat de la technique

Les compresseurs axiaux sont bien connus en soi et sont utilisés entre autres dans les turbomachines.

Ces compresseurs basse ou haute pression comportent plusieurs étages d'aubes tournantes qui sont séparés par des étages redresseurs qui ont pour but de repositionner le vecteur vitesse du fluide sortant de l'étage précédent avant de l'envoyer vers l'étage suivant.

Ces étages redresseurs sont constitués essentiellement d'aubes fixes, encore appelées aubes statoriques, reliant une virole extérieure à une virole intérieure, toutes deux concentriques et délimitant la zone d'écoulement d'air ou veine aérodynamique. L'ensemble des viroles extérieures forme le carter. Le redresseur peut être composé d'un assemblage de plusieurs étages enfilés étage par étage ou peut être composé d'un ensemble monobloc intégrant directement plusieurs étages éventuellement via une technologie de demi-coquilles.

Selon l'état de la technique, les redresseurs sont en matériau métallique (TA6V, acier ou aluminium) et les aubes au sein du redresseur sont essentiellement de ▪matière et de profil unique sur un même étage. La virole extérieure assure l'essentiel des fonctions mécaniques. Les viroles intérieures sont quant à elles relativement souples, n'assurant en conséquence pas de fonction structurale et n'apportant que peu de raideur au système. Les aubes sont rapportées sur les viroles extérieures par diverses technologies d'assemblage (soudure, rivetage, boulonnage) et sont attachées aux viroles intérieures par un joint souple (communément de type silicone).

En vue de rigidifier le stator, le document EP 2 075 413 A1 présente un étage de redresseur comportant une pluralité de raidisseurs répartis entre les aubes statoriques. Ces raidisseurs assurent chacun une liaison mécanique entre la virole extérieure et les viroles intérieures en limitant ainsi les déplacements de ces dernières. La présence de raidisseurs ayant un profil très différent de celui des aubes aérodynamiques entraîne des perturbations aérodynamiques qui doivent être compensées par l'utilisation d'aubes à incidence variable et/ou à profil variable entre elles.

On connaît également du document EP 0 761 931 A1 un agencement de turbomachine comprenant un carter extérieur, un carter intérieur et un carter intermédiaire disposé entre les carters intérieur et extérieur. Dans cet agencement, des aubes structurales reliant les différents carters alternent avec des aubes aérodynamiques.

On connaît ausdi du document GB 2 004 329 A une turbomachine comprenant un compresseur radial et un diffuseur radial où l'air issu du diffuseur est décéléré dans un stator axial disposé devant la chambre de combustion. Ce dernier est divisé en groupes d'aubages dont chacun est constitué par une série d'aubages directeurs relativement petits et par un aubage directeur relativement grand. Les petits aubages directeurs sont conformés exclusivement en fonction de la mécanique des fluides tandis que le grand aubage directeur est creux, a une corde plus longue et une épaisseur absolue du profil plus grande que celle des plus petits aubages.

On connaît aussi du document EP 0 942 150 A2 un ensemble d'aubes de stator pour une turbomachine comprenant des aubes statoriques arrangées en groupes entre des paires adjacentes de bras de support.

Du document EP 1 770 246 A2, on connaît un carter structural de turbomachine comprenant un moyeu central, au moins une virole intermédiaire et un anneau externe, la virole intermédiaire et le moyeu central étant reliés par une série de bras. Cette dernière comprend au moins un bras principal supportant l'essentiel des efforts mécaniques et au moins un bras secondaire de masse inférieure au bras principal et destiné à supporter relativement moins d'efforts.

On connaît également du document US 4,785,625, un groupe moteur monté à la structure d'un avion via un assemblage comprenant un ensemble de bras de support qui connectent le générateur central, la soufflante et la structure de l'avion. Dans cet assemblage, certains bras de supports ont une corde plus longue et une épaisseur plus importantes que les autres afin de reprendre une charge supérieure.

### Buts de l'invention

La présente invention vise à fournir une solution qui permette de s'affranchir des inconvénients de l'état de la technique.

La présente invention vise plus particulièrement à fournir une architecture de redresseur rigidifiée sans introduire de perturbations aérodynamiques significatives au sein du redresseur.

La présente invention a aussi pour but de fournir un redresseur utilisant des matériaux composites ayant une raideur d'ensemble équivalente à une configuration 100% métallique.

La présente invention a aussi pour objectif de fabriquer des redresseurs aubagés à faible masse et faible coût pour tout compresseur constitué d'un assemblage de type stator proposé conjointement avec un rotor de type soit disques aubagés monobloc, soit tambour ou autres.

La présente invention a également pour objectif de fournir une architecture de redresseur modulaire optimisant les requis de tenue mécanique, de raideur, de coût et de réparabilité.

### Principaux éléments caractéristiques de l'invention

La présente invention se rapporte à un étage redresseur de turbomachine comportant une pluralité d'aubes fixes reliant un support de virole intérieure à un support de virole extérieure, ledit support de virole intérieure et ledit support de virole extérieure délimitant une veine aérodynamique, la pluralité d'aubes fixes se composant d'aubes dites structurales encadrant des aubes dites non structurales ou aéro de manière à former des caissons, lesdites aubes structurales étant rigidement attachées au support de virole intérieure au moyen d'éléments de fixation afin de conférer une rigidité accrue aux caissons.

Selon l'invention, le support de virole intérieure et le support de virole extérieure comportent respectivement une pluralité de plateformes assemblées côte à côte. De plus, selon des modes particuliers de l'invention, l'étage redresseur comporte au moins une ou une combinaison appropriée des caractéristiques suivantes:
- chaque aube structurale comporte une plateforme en tête de pale et une plateforme en pied de pale, lesdites plateformes comportant des orifices pour le passage d'éléments de fixation et assurant une fixation rigide, une fois assemblées aux supports respectifs de virole intérieure et extérieure;
- chaque aube aéro comporte un pied situé dans l'alignement du plan de la pale et un bulbe ou une plateforme, situé en tête de pale, ladite plateforme étant normale au plan de la pale;
- chaque plateforme du support de virole extérieure comporte une zone d'épaisseur réduite à chacune de ses extrémités, ladite zone formant avec la zone de la plateforme disposée côte à côte un logement pour la plateforme en tête de pale de l'aube structurale, ledit logement étant de dimensions sensiblement égales aux dimensions de la plateforme en tête de pale d'une aube structurale et étant disposé dans la veine aérodynamique;
- chaque plateforme du support de virole intérieure comporte une zone d'épaisseur réduite à chacune de ses extrémités, ladite zone formant avec la zone de la plateforme disposée côte à côte un logement pour la plateforme en pied de pale de l'aube structurale, ledit logement étant de dimensions sensiblement égales aux dimensions de la plateforme en pied de pale d'une aube structurale et étant disposé à l'extérieur de la veine aérodynamique;
- chaque plateforme du support de virole extérieure comporte des ajours destinés à recevoir le bulbe ou la plateforme des aubes aéro et des orifices pour le passage d'éléments de fixation;
- les plateformes du support de virole extérieure sont fixées à un carter comportant des orifices pour le passage d'éléments de fixation, et en ce que les plateformes en tête de pale des aubes structurales sont fixées conjointement aux plateformes du support de virole extérieure et au carter;
- chaque plateforme du support de virole intérieure comporte des ajours destinés à recevoir le pied de l'aube aéro ainsi que des orifices destinés à recevoir les éléments de fixation assurant l'assemblage des plateformes en pied d'aubes structurales avec les plateformes du support de virole intérieure;
- les éléments de fixation sont disposés dans des buselures métalliques au niveau desdits orifices;
- un joint élastomère comble le jeu entre le pied de l'aube aéro et l'ajour;
- les éléments de fixation comportent des lockbolts;
- le bulbe comporte deux faces d'appui inclinées et destinées à être placées en interface avec la plateforme du support de virole extérieure ainsi qu'une troisième face d'appui perpendiculaire au plan de pale destinée à être placée en interface avec le carter;
- le carter est réalisé en matériau composite ou métallique;
- les aubes structurales sont réalisées dans un matériau plus rigide que les aubes aéro;
- les aubes structurales et les aubes aéro sont réalisées respectivement en matériau métallique et composite;
- le support de virole intérieure et le support de virole extérieure sont réalisés en matériau composite;
- les aubes structurales ont un profil plus épais que les aubes aéro.

La présente invention se rapporte également à un compresseur de turbomachine comprenant une pluralité d'étages redresseurs tels que décrits ci-dessus. Selon un mode particulier de l'invention, le compresseur comprend un carter en demi-coquilles intégrant plusieurs étages redresseurs.

### Brève description des figures

La figure 1 représente à gauche une vue schématique de la construction classique d'un redresseur selon l'état de l'art et de la répartition des efforts qui en découle et représente à droite une vue schématique de l'architecture sous forme de caissons selon l'invention et de la répartition des efforts qui en découle.

La figure 2 représente une vue tridimensionnelle de la demi-coquille de carter utilisée dans l'architecture de redresseur selon l'invention.

La figure 3 représente deux vues tridimensionnelles de l'aube structurale utilisée dans l'architecture de redresseur selon l'invention.

La figure 4 représente une vue tridimensionnelle de l'aube non structurale ou aéro utilisée dans l'architecture de redresseur selon l'invention.

La figure 5 représente une vue tridimensionnelle du support de virole extérieure (en demi-coquille) et d'une plateforme du support de virole extérieure selon l'invention.

La figure 6 représente une vue tridimensionnelle du support de virole intérieure (en demi-coquille) et d'une plateforme du support de virole intérieure selon l'invention.

La figure 7 représente une vue éclatée de l'assemblage d'une aube structurale et d'une aube non structurale à la plateforme du support de virole intérieure et la plateforme du support de virole extérieure selon l'invention.

La figure 8 représente une vue tridimensionnelle partielle de l'architecture de redresseur selon l'invention.

La figure 9 représente une vue tridimensionnelle partielle et éclatée du redresseur selon l'invention.

### Légende

1. Architecture schématique classique d'un redresseur
2. Architecture schématique d'un redresseur selon l'invention
3. Virole extérieure ou carter ou demi-coquille de carter
4. Virole intérieure
5. Aube dite structurale
6. Aube dite non structurale ou aéro
7. Caisson
8. Aube statorique
9. Plateforme de l'aube structurale en tête de pale
10.Plateforme de l'aube structurale en pied de pale
11.Pied de l'aube aéro
12.Pale de l'aube aéro
13. Bulbe de l'aube aéro
14. Support de virole extérieure
15. Plateforme du support de virole extérieure
16. Ajour dans la plateforme du support de virole extérieure
17. Eléments de fixation, par ex. lockbolt
18. Buselure métallique
19. Support de virole intérieure
20. Plateforme du support de virole intérieure
21. Ajour dans la plateforme du support de virole intérieure
22. Joint pré-moulé
23. Zone d'épaisseur réduite sur la plateforme du support de virole extérieure et sur la plateforme du support de virole intérieure
24. Plateforme située aux extrémités des supports de virole extérieure et intérieure dans une architecture en demi-coquilles.

### Description détaillée de l'invention

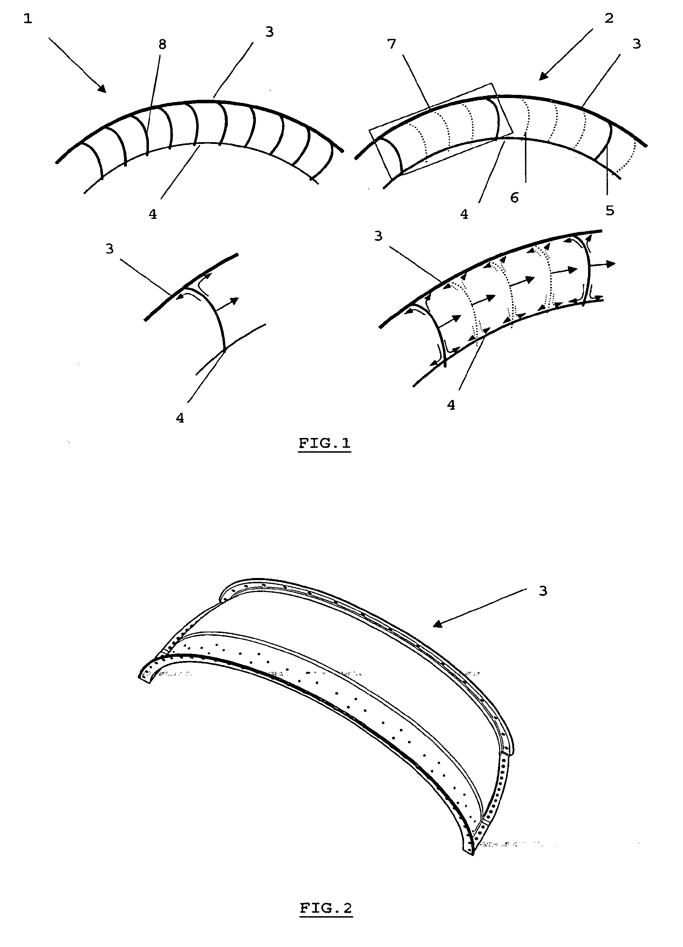

La présente invention se rapporte à une nouvelle architecture de redresseur de compresseur. Dans une construction classique 1, comme susmentionné et illustré schématiquement à gauche de la figure 1, la fonction structurale est assurée par la seule virole extérieure 3 et les aubes statoriques 8 sont réalisées dans un même matériau et ont un même profil. Il en résulte que tous les efforts sont répartis sur la virole extérieure 3 (figure 1 à gauche, partie inférieure). L'architecture selon la présente invention 2 consiste à combiner des aubes de rigidité différente au sein d'un étage de redresseur. L'étage comporte d'une part des aubes dites structurales 5 qui confèrent la rigidité au système et des aubes non structurales 6 de fonction principalement aérodynamique. Les aubes structurales 5 encadrant les aubes non structurales 6 délimitent des caissons 7. Selon l'invention et comme cela sera détaillé ci-dessous, les aubes structurales sont assemblées de manière rigide aux viroles intérieures, procurant ainsi à ces dernières une fonction mécanique accrue, augmentant de ce fait la raideur du système. Il en résulte que les efforts sont répartis sur la virole extérieure 3 et sur la virole intérieure 4 (figure 1 à droite, partie inférieure).

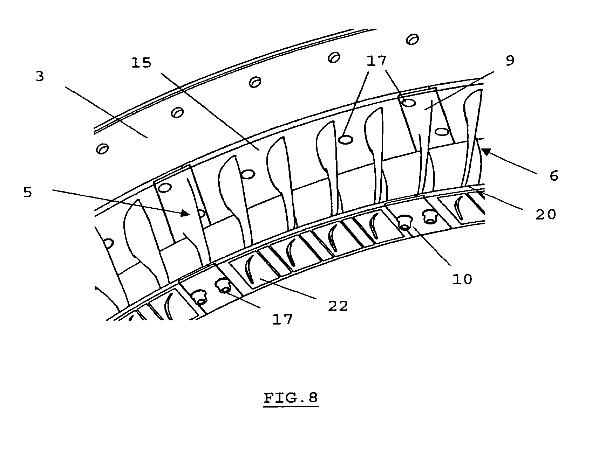

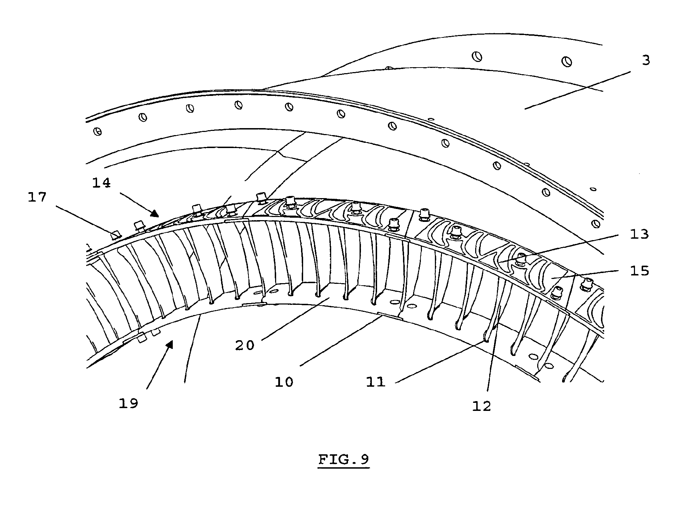

L'architecture de redresseur selon l'invention et telle que représentée aux figures 8 et 9 résulte de l'assemblage de cinq éléments principaux qui seront décrits ci-dessous :
- une virole extérieure ou carter 3,
- un support de virole extérieure 14 comportant un ensemble de plateformes 15 et destiné à être fixé au carter 3,
- un support de virole intérieure 19 comportant un ensemble de plateformes 20 et formant la virole intérieure après assemblage,
- un ensemble d'aubes statoriques comportant des aubes structurales 5 et des aubes aéro 6 destinées à relier le support de virole extérieure 14 au support de virole intérieure 19.

L'agencement de ces différents éléments sera plus clair à la lumière des explications ci-dessous. A titre illustratif, l'assemblage des aubes structurales et aéro à la virole intérieure et à la virole extérieure sera présenté pour une architecture de redresseur multi-étage en demi-coquille mais le redresseur constitué de caissons selon l'invention peut également être construit sur base d'une architecture annulaire mono-étage.

La demi-coquille de carter 3 est présentée à la figure 2. Elle comporte des orifices pour la fixation du support de virole extérieure (par souci de simplification, seul un étage de redresseur y est présenté). Elle comporte en outre des orifices sur les brides permettant l'assemblage des demi-coquilles entre elles pour former le carter. On parlera, par la suite, indifféremment de demi-coquille de carter ou de carter.

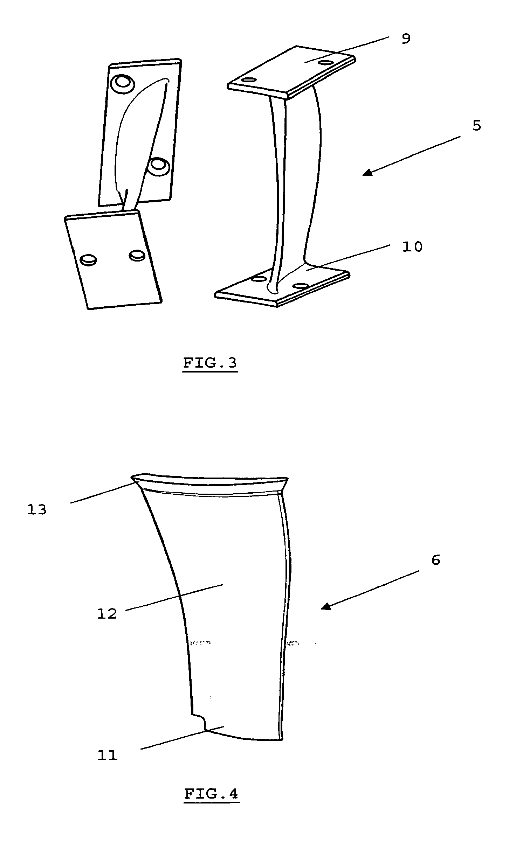

L'aube structurale 5 est représentée à la figure 3. Elle comporte une plateforme en tête 9 et pied 10 de pale (c'est-à-dire une architecture en I) afin d'être rigidement attachée d'une part au support de virole extérieure 14 et au carter 3 et d'autre part au support de virole intérieure 19 (figure 8). Les plateformes de l'aube structurale comporte des orifices, au nombre de deux par exemple, permettant d'intégrer des éléments de fixation assurant une fixation rigide mais démontable. Ces éléments de fixation peuvent être de type lockbolt comme illustré ci-dessous, de type boulonné ou de type riveté. Les plateformes en tête de pale 9 sont disposées à l'intérieur du carter 3 afin d'éviter de grands ajours dans le carter structurel pour maximiser sa résistance mécanique (figures 8 et 9). Pour une raison similaire, les orifices des systèmes de fixation sont de diamètre le plus faible et en nombre le plus restreint possible. Comme cela sera décrit plus loin, les plateformes de l'aube structurale permettent respectivement l'assemblage des différentes parties constitutives du support de la virole extérieure et du support de la virole intérieure. Les aubes structurales fournissent l'essentiel de la raideur des caissons, elles sont fabriquées dans un matériau plus rigide que les aubes non structurales et éventuellement elles sont de profils différents, notamment plus épais.

L'aube non structurale 6, illustrée à la figure 4, présente une architecture avec un pied 11 situé dans l'alignement du plan de la pale 12 et destiné à être fixé au support de virole intérieure. Le système d'attache de l'aube au support de virole extérieure peut quant à lui être constitué d'un bulbe 13 qui permet de positionner l'orientation de l'aube et d'assurer un assemblage serrant. De plus, le bulbe permet par sa contre-dépouille d'éviter à l'aube de se désolidariser de son support par glissement. Ce bulbe présente deux faces d'appui inclinées et destinées à être placées en interface avec une plateforme du support de la virole extérieure pour positionner axialement et angulairement le profil aéro de l'aube ainsi qu'une troisième face d'appui perpendiculaire au plan de la pale destinée à être placées en interface avec le carter pour fixer radialement l'aube dans le redresseur. Le système d'attache de l'aube aéro peut aussi être d'autres types:
- toujours avec un bulbe mais par soudage/collage au support de virole extérieure;
- avec, à la place du bulbe, une plateforme plane normale au plan de l'aube, dit aussi aube en T, la plateforme comportant également des faces d'appui destinées à être placées en interface avec une plateforme du support de la virole extérieure et une face d'appui destinée à être placée en interface avec le carter;
- par surmoulage du matériau du support de virole extérieure autour du prolongement du profil de la pale, l'aube aéro comportant ou ne comportant pas de bulbe.

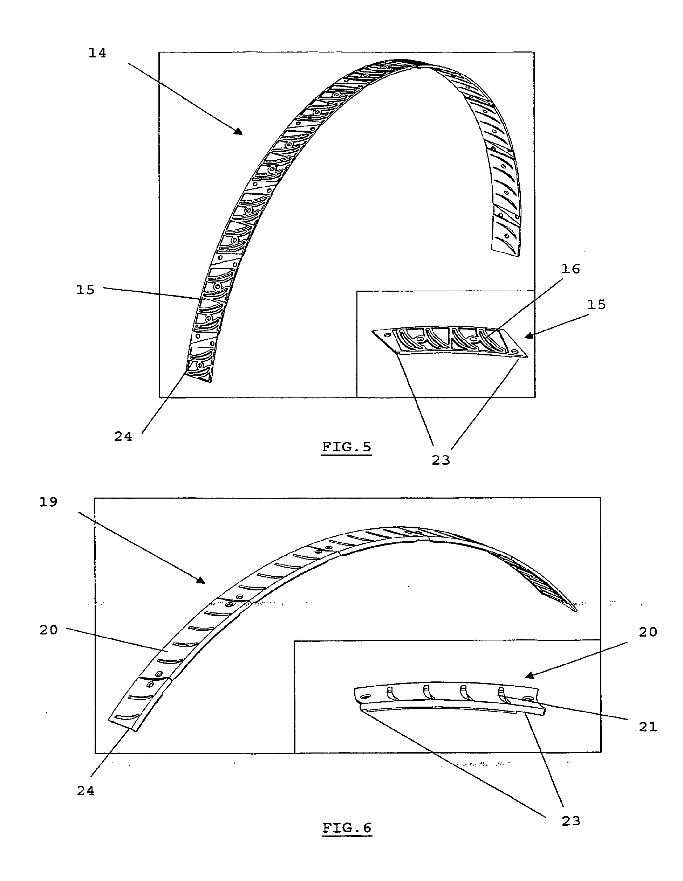

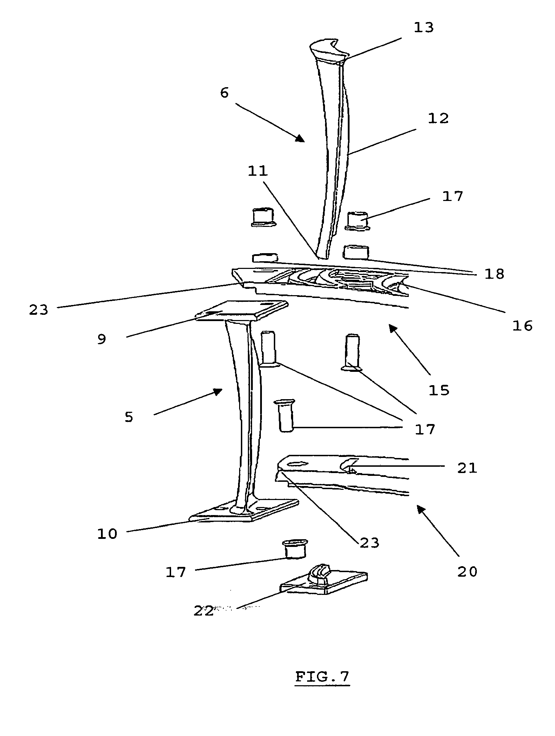

Le support de virole extérieure 14, illustré à la figure 5, comporte des plateformes 15 disposées côte à côte. Chaque plateforme du support de virole extérieure 15 comporte des ajours 16, par exemple au nombre de quatre, destinés à recevoir le bulbe 13 des aubes aéro 6 comme montré à la figure 7. En variante, les ajours sont destinés à recevoir la plateforme de l'aube aéro (non représenté). Elle comporte en outre des orifices pour le passage des éléments de fixation. La plateforme du support de virole extérieure 15 comporte une zone d'épaisseur réduite 23 à ses extrémités. Cette zone forme après assemblage des plateformes de support de virole extérieure un logement pour la plateforme en tête de pale de l'aube structurale 9 comme représenté à la figure 8. La réduction d'épaisseur est sensiblement égale à l'épaisseur de la plateforme en tête de pale de l'aube structurale de manière à ce que les plateformes du support de virole extérieure et les plateformes des aubes structurales forment une surface continue sans aspérité du côté de la veine aérodynamique. La plateforme 15 du support de virole extérieure est fixée au carter 3 au moyen de fixations mécaniques tels que par exemple des lockbolts 17 et les plateformes de support de virole extérieure 15 sont reliées entre elles au niveau de la plateforme en tête de pale de l'aube structurale 9 par un moyen de fixation (par exemple également de type lockbolt 17). Les moyens de fixations mécaniques sont insérés dans des buselures métalliques 18 visibles à la figure 7 afin de ne pas endommager la plateforme lors de la mise sous tension d'assemblage du moyen de fixation. Ces fixations démontables permettent une réparation par remplacement du caisson aisée en maintenance.

On remarquera à la figure 5, que pour les assemblages en demi-coquille tel qu'illustré à titre d'exemple ici, les plateformes disposées aux extrémités du support de virole extérieure 24 sont scindées en deux afin de conserver un même pas (dans ce cas de figure : 4 aubes aéro pour 1 aube structurale) lorsque les deux demi-coquilles sont assemblées pour former un anneau.

Le support de virole intérieure 19 présenté à la figure 6 comporte des plateformes 20 disposées côte à côte. La plateforme de support de virole intérieure 20 comporte des ajours 21 pour permettre l'assemblage du pied 11 de l'aube aéro (figures 7, 8 et 9). Les aubes aéro 6 sont assemblées en insérant au préalable un joint élastomère pré-moulé 22 au niveau du pied. Ce joint élastomère assure les fonctions de remplissage du jeu entre le pied de l'aube et l'ajour de plateforme du support intérieur d'aubes et également, contribue à l'amortissement des vibrations de l'aube aéro. Néanmoins, d'autres systèmes de fixation peuvent être envisagés comme le surmoulage de silicone ou autres matériaux (par exemple Thermoplastiques), le soudage, etc. La plateforme de support de virole intérieure 20 présente en outre des orifices pour le passage d'éléments de fixation. De manière similaire aux plateformes du support de virole extérieure, la plateforme du support de virole intérieure 20 comporte une zone d'épaisseur réduite à ses extrémités 23 pour former après assemblage côte à côte des plateformes de support de virole intérieure un logement pour la plateforme en pied de pale de l'aube structurale 10 comme illustré à la figure 9. Selon l'invention, la plateforme en pied de l'aube 10 est disposée à l'extérieur de la veine aérodynamique. Les plateformes de support de virole intérieure 20 sont reliées entre elles au niveau des plateformes en pied de pale des aubes structurales 10 par un moyen de fixation mécanique tel que par exemple des lockbolts 17 avec buselures métalliques (non représenté à la figure 7). En variante, on peut insérer un assemblage par queue d'aronde. La fixation de l'aube structurale au support de virole intérieure permet d'une part de rigidifier l'ensemble du caisson et, d'autre part, empêche tout risque de détachement de la plateforme de support de virole intérieure par perte d'adhésion avec les aubes aéro. On remarquera comme précédemment que les plateformes de virole intérieure disposées aux extrémités du support 24 sont également coupées en 2 pour des raisons similaires.

L'ensemble des aubes aéro délimité à chaque extrémité par une aube structurale forme le caisson selon l'invention. Cette architecture du redresseur sous forme de caissons augmente la rigidité du système par rapport à une architecture classique selon l'état de la technique et permet en conséquence la réalisation de redresseur majoritairement en matériau composite. Le carter est ainsi préférentiellement en matériau composite et est obtenu avantageusement par le procédé RTM *(Resin Transfer Moulding).* En variante, le carter peut aussi être conçu sur base d'autres procédés (RFI pour *Resin Film Infusion,* prepeg en autoclave, thermoformage de thermoplastiques) ou être réalisé en matériau métallique. Les aubes structurales sont préférentiellement métalliques et, plus particulièrement, en acier (E = 220 GPa) ou en titane (E = 110 GPa). Les aubes non structurales ou aéro sont moins sollicitées mécaniquement de par la reprise de raideur & efforts transitant par les aubes structurales et peuvent, en conséquence, être réalisées dans un matériau moins rigide que les aubes structurales. Elles sont préférentiellement réalisées en matériau composite avec une fabrication optimisée pour réduire les coûts. Comme mentionné précédemment, les aubes aéro présentent une architecture avec un pied situé dans l'alignement du plan de la pale. La géométrie la plus plane possible de l'aube aéro favorise la fabrication de cette aube par un procédé composite comme le moulage par injection ou compression ou préformage de fibres longues. Les plateformes de support de viroles extérieure et éventuellement intérieure sont préférentiellement en matériau composite et réalisées par injection ou compression de fibres longues avec résine thermoplastique, ou par thermoformage/moulage par compression de préformes avec résine thermoplastique. L'avantage du thermoplastique est de permettre l'utilisation de procédé de soudage (friction, induction, surmoulage, etc.) entre composants thermoplastiques.

### Avantages de l'architecture de redresseur selon l'invention

Le concept d'assemblage «modulaire» c'est-à-dire à partir d'éléments approvisionnés séparément permet d'une part un choix de matériaux et de procédés adapté à chaque fonction des pièces constituant l'ensemble et d'autre part, une simplification de l'inspection des pièces et de la méthode d'assemblage. Ce choix de matériau adapté à chaque fonction permet de fabriquer des redresseurs avec des matériaux plus ou moins nobles selon les pièces et permet, en conséquence, une réduction de coût par rapport à une architecture monobloc où toutes les pièces par définition sont constituées d'un même matériau. Ainsi, les carters de redresseurs réalisés selon l'invention gagneront en masse et en coût par rapport au carter en titane de par l'utilisation de composite qui permet d'atteindre des performances identiques avec des propriétés spécifiques supérieures et un coût de fabrication mesuré grâce à la meilleure optimisation de la quantité de matière mise en oeuvre. En effet, les carters métalliques sont fabriqués à partir de pièces forgées de grande taille, lourdes et onéreuses nécessitant un enlèvement de matière important par usinage. Le coût de fabrication est également mesuré par rapport à un stator composite entièrement à matrice thermodurcissable de par l'utilisation d'aubes non structurales réalisées de façon économique, par exemple, en thermoplastique injecté.

Cette architecture permet de combiner des aubes de rigidité différente mais avec l'objectif de conserver une raideur d'ensemble équivalente à une configuration 100% métallique (en titane soudé). Cela permet d'optimiser plus librement les fonctions aérodynamiques sur une majorité des aubes aéro en se libérant d'un certain nombre de limitations dues aux exigences de tenue mécanique.

Cette architecture permet une réparabilité simplifiée et économique des aubes, un simple remplacement étant beaucoup plus aisé que dans les architectures actuelles les plus courantes (assemblage titane soudé).

Les sollicitations sur le carter sont limitées lors d'une perte d'aube fan (FBO) car les aubes non structurales transmettent nettement moins d'efforts du rotor vers le stator lors de cet événement. Une réduction de masse supplémentaire du carter stator peut ainsi être atteinte.

Les vibrations au niveau des aubes aéro sont également réduites grâce aux joints élastomères.

## Revendications

1. Etage redresseur de turbomachine comportant une pluralité d'aubes fixes reliant un support de virole intérieure (19) à un support de virole extérieure (14), ledit support de virole intérieure et ledit support de virole extérieure délimitant une veine aérodynamique, la pluralité d'aubes fixes se composant d'aubes dites structurales (5) encadrant des aubes dites non structurales ou aéro (6) de manière à former des caissons (7), lesdites aubes structurales (5) étant rigidement attachées au support de virole intérieure (19) au moyen d'éléments de fixation (17) afin de conférer une rigidité accrue aux caissons (7), ledit étage redresseur étant **caractérisé en ce que** le support de virole intérieure (19) et le support de virole extérieure (14) comportent respectivement une pluralité de plateformes (20,15) assemblées côte à côte.

2. Etage redresseur selon la revendication 1, **caractérisé en ce que** chaque aube structurale (5) comporte une plateforme en tête de pale (9) et une plateforme en pied de pale (10), lesdites plateformes (9,10) comportant des orifices pour le passage d'éléments de fixation (17) et assurant une fixation rigide, une fois assemblées aux supports respectifs de virole intérieure et extérieure (19,14).

3. Etage redresseur selon la revendication 2, **caractérisé en ce que** chaque aube aéro (6) comporte un pied (11) situé dans l'alignement du plan de la pale (12) et un bulbe (13) ou une plateforme, situé en tête de pale, ladite plateforme étant plane et normale au plan de la pale.

4. Etage redresseur selon la revendication 2, **caractérisé en ce que** chaque plateforme du support de virole extérieure (15) comporte une zone d'épaisseur réduite (23) à chacune de ses extrémités, ladite zone formant avec la zone (23) de la plateforme disposée côte à côte un logement pour la plateforme en tête de pale de l'aube structurale (9), ledit logement étant de dimensions sensiblement égales aux dimensions de la plateforme en tête de pale d'une aube structurale (9) et étant disposé dans la veine aérodynamique.

5. Etage redresseur selon la revendication 2, **caractérisé en ce que** chaque plateforme du support de virole intérieure (20) comporte une zone d'épaisseur réduite (23) à chacune de ses extrémités, ladite zone formant avec la zone (23) de la plateforme disposée côte à côte un logement pour la plateforme en pied de pale de l'aube structurale (10), ledit logement étant de dimensions sensiblement égales aux dimensions de la plateforme en pied de pale d'une aube structurale (10) et étant disposé à l'extérieur de la veine aérodynamique.

6. Etage redresseur selon la revendication 3, **caractérisé en ce que** chaque plateforme du support de virole extérieure (15) comporte des ajours (16) destinés à recevoir le bulbe (13) ou la plateforme des aubes aéro et des orifices pour le passage d'éléments de fixation (17).

7. Etage redresseur selon la revendication 6, **caractérisé en ce que** les plateformes du support de virole extérieure (15) sont fixées à un carter (3) comportant des orifices pour le passage d'éléments de fixation (17), et **en ce que** les plateformes en tête de pale des aubes structurales (9) sont fixées conjointement aux plateformes du support de virole extérieure (15) et au carter (3).

8. Etage redresseur selon la revendication 3, **caractérisé en ce que** chaque plateforme du support de virole intérieure (20) comporte des ajours (21) destinés à recevoir le pied de l'aube aéro (11) ainsi que des orifices destinés à recevoir les éléments de fixation (17) assurant l'assemblage des plateformes en pied d'aubes structurales (10) avec les plateformes du support de virole intérieure (20).

9. Etage redresseur selon l'une quelconque des revendications 6 à 8, **caractérisé en ce que** les éléments de fixation (17) sont disposés dans des buselures métalliques (18) au niveau desdits orifices.

10. Etage redresseur selon la revendication 8, **caractérisé en ce qu'**un joint élastomère (22) comble le jeu entre le pied de l'aube aéro (11) et l'ajour (21).

11. Etage redresseur selon l'une quelconque des revendications 6 à 8, **caractérisé en ce que** les éléments de fixation (17) comportent des lockbolts.

12. Etage redresseur selon la revendication 7, **caractérisé en ce que** le bulbe (13) comporte deux faces d'appui inclinées et destinées à être placées en interface avec la plateforme du support de virole extérieure (15) ainsi qu'une troisième face d'appui perpendiculaire au plan de pale (12) destinée à être placée en interface avec le carter (3).

13. Etage redresseur selon la revendication 7, **caractérisé en ce que** le carter (3) est réalisé en matériau composite ou métallique.

14. Etage redresseur selon l'une quelconque des revendications précédentes, **caractérisé en ce que** les aubes structurales (5) sont réalisées dans un matériau plus rigide que les aubes aéro (6).

15. Etage redresseur selon la revendication 14, **caractérisé en ce que** les aubes structurales (5) et les aubes aéro (6) sont réalisées respectivement en matériau métallique et composite.

16. Etage redresseur selon l'une quelconque des revendications précédentes, **caractérisé en ce que** le support de virole intérieure (19) et le support de virole extérieure (14) sont réalisés en matériau composite.

17. Etage redresseur selon l'une quelconque des revendications précédentes, **caractérisé en ce que** les aubes structurales (5) ont un profil plus épais que les aubes aéro (6).

18. Compresseur de turbomachine comprenant une pluralité d'étages redresseurs selon l'une quelconque des revendications précédentes.

19. Compresseur selon la revendication 18, **caractérisé en ce que** ledit compresseur comprend un carter (3) en demi-coquilles intégrant plusieurs étages redresseurs.

## Patentansprüche

1. Leitschaufelstufe einer Strömungsmaschine, die eine Vielzahl von Leitschaufeln umfasst, die einen Innenringhalter (19) mit einem Außenringhalter(14) verbinden, wobei der Innenringhalter und der Außenringhalter eine aerodynamische Strömung begrenzen, wobei sich die Vielzahl von Leitschaufeln aus Strukturschaufeln (5) zusammensetzt, die Nicht-Struktur- oder Luftschaufeln (6) derart umrahmen, dass Kästen (7) gebildet werden, wobei die Strukturschaufeln (5) starr mit dem Inneringhalter (19) mit Hilfe von Befestigungselementen (17) verbunden sind, um den Kästen (7) eine höhere Steifigkeit zu verleihen, wobei die Leitschaufelstufe **dadurch gekennzeichnet ist, dass** der Innenringhalter (19) und der Außenringhalter (14) jeweils eine Vielzahl nebeneinander verbundener Plattformen (20, 15) aufweisen.

2. Leitschaufelstufe nach Anspruch 1, **dadurch gekennzeichnet, dass** jede Strukturschaufel (5) eine Schaufelkopfplattform (9) und eine Schaufelfußplattform (10) aufweist, wobei die Plattformen (9, 10) Öffnungen für den Durchgang von Befestigungselementen (17) aufweisen und eine starre Befestigung sichern, sobald sie an den jeweiligen Innen- und Außenringhaltern (19, 14) befestigt sind.

3. Leitschaufelstufe nach Anspruch 2, **dadurch gekennzeichnet, dass** jede Luftschaufel (6) einen Fuß (11), der sich in der Ausrichtung der Schaufelebene (12) befindet, und eine Wulst (13) oder eine Plattform, die sich am Schaufelkopf befindet, aufweist, wobei die Plattform zur Schaufelebene eben und senkrecht ist.

4. Leitschaufelstufe nach Anspruch 2, **dadurch gekennzeichnet, dass** jede Plattform des Außenringhalters (15) an jedem ihrer Enden eine Zone reduzierter Dicke (23) aufweist, wobei die Zone mit der Zone (23) der Plattform, die nebeneinander angeordnet ist, eine Aufnahme für die Schaufelkopfplattform der Strukturschaufel-(9) bildet, wobei die Aufnahme Abmessungen aufweist, die im Wesentlichem gleich den Abmessungen der Schaufelkopfplattform einer Strukturschaufel (9) ist und in der aerodynamischen Strömung angeordnet ist.

5. Leitschaufelstufe nach Anspruch 2, **dadurch gekennzeichnet, dass** jede Plattform des Innenringhalters (20) an jedem ihrer Enden eine Zone reduzierter Dicke (23) aufweist, wobei die Zone mit der Zone (23) der Plattform, die nebeneinander angeordnet ist, eine Aufnahme für die Schaufelkopfplattform der Strukturschaufel (10) bildet, wobei die Aufnahme Abmessungen hat, die im Wesentlichem gleich den Abmessungen der Schaufelkopfplattform einer Strukturschaufel (10) ist und außerhalb der aerodynamischen Strömung angeordnet ist.

6. Leitschaufelstufe nach Anspruch 3, **dadurch gekennzeichnet, dass** jede Plattform des Außenringhalters (15) Aufschnitte (16), die zur Aufnahme der Wulst (13) oder der Plattform der Luftschaufeln bestimmt sind, und Öffnungen für den Durchgang von Befestigungselementen (17) aufweist.

7. Leitschaufelstufe nach Anspruch 6, **dadurch gekennzeichnet, dass** die Plattformen des Außenrinhalters(15) an einem Gehäuse (3) befestigt sind, das Öffnungen für den Durchgang von Befestigungselementen (17) aufweist, und dass die Schaufelkopfplattformen der Strukturschaufeln (9) gemeinsam an den Plattformen des Außenringhalters (15) und am Gehäuse (3) befestigt sind.

8. Leitschaufelstufe nach Anspruch 3, **dadurch gekennzeichnet, dass** jede Plattform der Innenringhalter (20) Aufschnitte (21) aufweist, die zur Aufnahme des Luftschaufelfußes (11) bestimmt sind, sowie Öffnungen, die zur Aufnahme der Befestigungselemente (17) bestimmt sind, die die Verbindung der Plattformen, die sich am Schaufelfuß der Strukturschaufel (10) befinden mit den Plattformen der Innenringhalter (20) sichern.

9. Leitschaufelstufe nach einem der Ansprüche 6 bis 8, **dadurch gekennzeichnet, dass** die Befestigungselemente (17) in metallischen Überzügen (18) im Bereich der Öffnungen angeordnet sind.

10. Leitschaufelstufe nach Anspruch 8, **dadurch gekennzeichnet, dass** eine Elastomerdichtung (22) das Spiel zwischen dem Luftschaufelfuß (11) und dem Aufschnitt (21) ausgleicht.

11. Leitschaufelstufe nach einem der Ansprüche 6 bis 8, **dadurch gekennzeichnet, dass** die Befestigungselemente (17) Verriegelungsbolzen aufweisen.

12. Leitschaufelstufe nach Anspruch 7, **dadurch gekennzeichnet, dass** die Wulst (13) zwei Stützflächen aufweist, die geneigt und dazu bestimmt sind, als Schnittstelle mit der Plattform des Außenringhalters(15) platziert zu sein sowie eine dritte, zur Schaufelebene (12) senkrechte Stützfläche, die dazu bestimmt ist, als Schnittstelle mit dem Gehäuse (3) platziert zu sein.

13. Leitschaufelstufe nach Anspruch 7, **dadurch gekennzeichnet, dass** das Gehäuse (3) aus einem Verbundwerkstoff oder einem metallischen Material hergestellt ist.

14. Leitschaufelstufe nach irgendeinem der vorangehenden Ansprüche, **dadurch gekennzeichnet, dass** die Strukturschaufeln (5) aus einem steiferen Material als die Luftschaufeln (6) hergestellt sind.

15. Leitschaufelstufe nach Anspruch 14, **dadurch gekennzeichnet, dass** die Strukturschaufeln (5) und die Luftschaufeln (6) jeweils aus metallischem Material und Verbundwerkstoff hergestellt sind.

16. Leitschaufelstufe nach irgendeinem der vorangehenden Ansprüche, **dadurch gekennzeichnet, dass** der Innenringhalter (19) und der Außenringhalter (14) aus Verbundwerkstoff hergestellt sind.

17. Leitschaufelstufe nach irgendeinem der vorangehenden Ansprüche, **dadurch gekennzeichnet, dass** die Strukturschaufeln (5) ein dickeres Profil als die Luftschaufeln (6) haben.

18. Verdichter einer Strömungsmaschine, der eine Vielzahl von Leitschaufelstufen nach irgendeinem der vorangehenden Ansprüche umfasst.

19. Verdichter nach Anspruch 18, **dadurch gekennzeichnet, dass** der Verdichter ein Gehäuse (3) in Halbschalen-Bauweise umfasst, das mehrere Leitschaufelstufen integriert.

## Claims

1. A turbine-engine rectifier stage comprising a plurality of fixed vanes connecting an inner ferrule support (19) to an outer ferrule support (14), said inner ferrule support and said outer ferrule support defining an aerodynamic vein, the plurality of fixed vanes comprising so-called structural vanes (5) surrounding so-called non-structural or aero vanes (6) so as to form boxes (7), said structural vanes (5) being rigidly attached to inner ferrule support (19) by means of attachment elements (17) in order to impart increased stiffness to the boxes (7), the so-called rectifier stage being **characterised in that** the inner ferrule support (19) and the outer ferrule support (14) comprise respectively a plurality of platforms (20,15) assembled side by side.

2. The rectifier stage as in Claim 1, wherein each structural vane (5) comprises a platform (9) at the blade head and a platform (10) at the blade foot, said platforms (9,10) comprising holes for the passage of attachment elements (17) and ensuring stiff attachment, once they are assembled to the respective supports of the inner ferrule and outer ferrule (19,14).

3. The rectifier stage as in Claim 2, wherein each aero vane (6) comprises a foot (11) located in the alignment of the plane of the blade (12) and a bulb (13) or platform, located at the head of the blade, said platform being flat and normal to the plane of the blade.

4. The rectifier stage as in Claim 2, wherein each platform of the outer ferrule support (15) comprises a zone (23) of reduced thickness at each of its ends, said zone forming with the zone (23) of the platform positioned side by side, a housing for the platform (9) at the blade head of the structural vane, said housing being of dimensions that are substantially equal to the dimensions of the platform (9) at the blade head of a structural vane and being positioned in the aerodynamic vein.

5. The rectifier stage as in Claim 2, wherein each sector (20) of the inner ferrule support comprises a zone (23) of reduced thickness at each of its ends, said zone forming with the zone (23) of the sector positioned side by side, a housing for the platform (10) at the blade foot of the structural vane, said housing being of dimensions that are substantially equal to the dimensions of the platform (10) at the blade foot of a structural vane and being positioned outside the aerodynamic vein.

6. The rectifier stage as in Claim 3, wherein each sector (15) of the outer ferrule support comprises holes (16) intended to receive the bulb (13) or the platform of the aero vanes, and holes for the passage of attachment elements (17).

7. The rectifier stage as in Claim 6, wherein the sectors (15) of the outer ferrule support are attached to a casing (3) comprising holes for the passage of attachment elements (17), and wherein the platforms (9) at the blade head of the structural vanes are attached together to the sectors (15) of the outer ferrule support and to the casing (3).

8. The rectifier stage as in Claim 3, wherein each sector (20) of the inner ferrule support comprises piercings (21) intended to receive the feet (11) of the aero vanes as well as holes intended to receive the attachment elements (17) ensuring the assembling of the platforms (10) at the foot of the structural vanes with the sectors (20) of the inner ferrule support.

9. The rectifier stage as in any of Claims 6 to 8, wherein the attachment elements (17) are positioned in metal nozzles (18) at the level of said holes.

10. The rectifier stage as in Claim 8, wherein an elastomeric joint (22) fills the gap between the foot (11) of the aero vane and the piercing (21).

11. The rectifier stage as in any of Claims 6 to 8, wherein the attachment elements (17) comprise lock-bolts.

12. The rectifier stage as in Claim 7, wherein the bulb (13) comprises two tilted supporting faces intended to be placed as an interface with the sector (15) of the outer ferrule support as well as a third supporting face that is perpendicular to the plane of the blade (12) intended to be placed as an interface with the casing (3).

13. The rectifier stage as in Claim 7, wherein the casing (3) is made of a composite or metal material.

14. The rectifier stage as in any of the preceding claims, wherein the structural vanes (5) are made of a more rigid material than the aero vanes (6).

15. The rectifier stage as in Claim 14, wherein the structural vanes (5) and the aero vanes (6) are made of a metal and composite material, respectively.

16. The rectifier stage as in any of the preceding claims, wherein the inner ferrule support (19) and the outer ferrule support (14) are made of composite material.

17. The rectifier stage as in any of the preceding claims, wherein the structural vanes (5) have a thicker profile than the aero vanes (6).

18. Turbine engine compressor comprising a plurality of rectifier stages as in any of the preceding claims.

19. The compressor as in Claim 18 comprising a half-shell casing (3) that integrates several rectifier stages.
